# EUROPÄISCHE PATENTSCHRIFT

(11) **EP 2 223 588 B1**
(45) Veröffentlichungstag und Bekanntmachung des Hinweises auf die Patenterteilung: **23.11.2011**
(21) Anmeldenummer: 10151460.2
(22) Anmeldetag: 22.01.2010
(51) Int. Cl.: A01D 41/127, F02D 31/00, F02D 41/02

(54) **Selbstfahrende Erntemaschine**
Automotive harvesting machine
Récolteuse automobile

(30) Priorität: 31.07.2009 DE 102009028175; 27.02.2009 DE 102009001208
(43) Veröffentlichungstag der Anmeldung: 01.09.2010
(60) Teilanmeldung: 11159550.0
(73) Patentinhaber: DEERE & COMPANY, Moline, Illinois 61265-8098 (US)
(72) Erfinder: Finkler, Jan, 66625 Nohfelden Eiweiler (DE); Wendling, Ignatz, 66482 Zweibrücken (DE); Hofer, Juergen, 66501 Grossbundenbach (DE)
(74) Vertreter: Holst, Sönke

(56) Entgegenhaltungen:
- EP-A1- 1 236 389
- EP-A1- 1 658 765
- EP-A1- 1 818 524
- EP-A1- 1 946 631
- EP-A2- 1 052 388
- EP-A2- 2 057 881

## Beschreibung

Die Erfindung betrifft eine selbstfahrende Erntemaschine, umfassend:
einen Verbrennungsmotor,
eine elektronische Steuereinrichtung, die mit dem Verbrennungsmotor gekoppelt ist und die Drehzahl des Verbrennungsmotors vorgeben kann, und die mit einer Information beaufschlagbar ist, ob sich die Erntemaschine im Straßenfahrbetrieb oder im Erntebetrieb befindet.

### Stand der Technik

Landwirtschaftliche selbstfahrende Erntemaschinen, wie beispielsweise Mähdrescher und Feldhäcksler, werden üblicherweise mittels eines Verbrennungsmotors angetrieben. Die Drehzahl des Verbrennungsmotors wird im einfachsten Fall durch den Bediener vorgegeben, wozu Drehknöpfe oder andere Bedienelemente vorgesehen sind, deren Stellung durch einen Sensor erfasst und an eine elektronische Motorsteuerung übermittelt wird, welche ihrerseits die Drehzahl des Verbrennungsmotors entsprechend der Bedienervorgabe einstellt. Beim Erntevorgang stellt der Bediener eine vom Hersteller vorgeschlagene, relativ hohe Drehzahl ein. Die Drehzahl des Verbrennungsmotors sinkt dann im Erntebetrieb abhängig vom aktuellen Erntegutdurchsatz ab, wobei der Bediener bestrebt ist, durch Anpassung der mittels eines Fahrhebels vorgegebenen Vortriebsgeschwindigkeit eine geeignete Drehzahl beizubehalten, die geringfügig unterhalb der eingestellten Drehzahl liegt. Dabei erweisen sich bei Bestandsdichtenvariationen auf einem Feld entsprechend häufige Korrekturen der der Vortriebsgeschwindigkeit als erforderlich, welche stets die Aufmerksamkeit des Bedieners erfordern und sich als ermüdend erweisen. Bei sehr hohen Belastungen der Erntemaschine mit Erntegut aufgrund dichter Bestände und/oder zu hoher Vortriebsgeschwindigkeit kann die Drehzahl des Verbrennungsmotors sogar soweit absinken, dass der Motor abstirbt.

Es wurde weiterhin vorgeschlagen (DE 35 05 887 A1), die Drehzahl der Häckseltrommel und das Antriebsmoment der ihr vorgelagerten Einheiten zu erfassen und die Vortriebsgeschwindigkeit abzusenken, wenn die Drehzahl der Häckseltrommel unter einem bestimmten Wert liegt oder das Antriebsmoment über einem bestimmten Wert liegt. Analog wird die Vortriebsgeschwindigkeit erhöht, wenn bestimmte Werte der Drehzahl überschritten oder bestimmte Werte des Antriebsmoments unterschritten werden. Dadurch bleibt die Drehzahl des Verbrennungsmotors stets innerhalb eines Drehzahlbereichs, der unterhalb der maximalen Drehzahl liegt. Bei dieser Ausführungsform wird die Kraftstoffzufuhr zum Verbrennungsmotor und dessen Drehzahl durch die Regeleinrichtung nicht verändert. Die Drehzahl des Verbrennungsmotors bleibt auch in Zeiten relativ kleiner Belastung relativ hoch, beispielsweise beim Wenden am Feldende oder beim Stehen oder bei einer Straßenfahrt, was zu unnötig hohem Kraftstoffverbrauch führt. Eine ähnliche Steuereinrichtung sieht die EP 1 419 687 A1 vor, wobei die Vortriebsgeschwindigkeit abhängig von der abgenommenen Leistung des Hauptaggregats (z. B. einer Dresch- oder Häckseltrommel) und von Nebenaggregaten, beispielsweise dem Fahrantrieb, abhängt und derart eingestellt wird, dass die Maximalleistung des Verbrennungsmotors nicht überschritten wird.

Außerdem wurde in der EP 1 275 290 A1 vorgeschlagen, die Motordrehzahl des Verbrennungsmotors eines Feldhäckslers abhängig von der Art des Erntevorsatzes und der Länge des Auswurfkrümmers des Feldhäckslers auszuwählen.

Die EP 1 232 682 A1 schlägt vor, die Leistungskurve der Motorsteuerung eines Verbrennungsmotors eines Mähdreschers abhängig von der Art des Erntevorsatzes auszuwählen.

In der EP 1 236 389 A1 wird vorgeschlagen, die Drehzahl des Verbrennungsmotors eines selbstfahrenden Feldhäckslers durch den Bediener veränderbar zu gestalten, dabei aber eine untere Grenze vorzugeben, um zu verhindern, dass sich das durch ein konstantes Übersetzungsverhältnis mit dem Verbrennungsmotor antriebsverbundene Auswurfgebläse bei zu geringen Drehzahlen mit Erntegut zusetzt.

Die EP 0 901 928 A2 schlägt vor, die Belastung von Abtrieben eines Verbrennungsmotors zu erfassen und bei Überschreitung eines Schwellenwerts die Drehzahl des Verbrennungsmotors herabzusetzen.

In der EP 1 609 349 A1 wird vorgeschlagen, den Verbrennungsmotor einer selbstfahrenden Erntemaschine mit einer variablen Drehzahl anzutreiben, die vom aktuellen Durchsatz abhängt. Die Vortriebsgeschwindigkeit der Erntemaschine wird durch den Bediener vorgegeben und ist vom Durchsatz unabhängig. In ähnlicher Weise wird in der EP 1 658 765 A1 vorgeschlagen, die Motordrehzahl bei fehlendem Erntegutdurchsatz um z. B. 100/min abzusenken und den Verbrennungsmotor zu beschleunigen, bevor ein sprunghafter Anstieg der Erntegutmenge in den Feldhäcksler einläuft.

Die DE 10 2007 004 576 A1 beschreibt einen selbstfahrenden Feldhäcksler, bei dem die Motordrehzahl bei relativ hohen Erntegutdurchsätzen gegenüber der Maximaldrehzahl herabgesetzt wird, während die Fahrgeschwindigkeit heraufgesetzt wird, um den Kraftstoffverbrauch zu vermindern. Hierbei wird die Tatsache ausgenutzt, dass bei den höheren Durchsätzen eine kleinere Beschleunigung des Ernteguts ausreicht, um es aus der Erntemaschine auszutragen.

Die EP 1 818 524 A1 beschreibt einen selbstfahrenden Feldhäcksler mit zwei Verbrennungsmotoren. Ein erster Verbrennungsmotor wird mit maximaler Leistung betrieben, während bei Teillastbetrieb der zweite Verbrennungsmotor bei der gleichen Drehzahl, aber einer kleineren Leistung betrieben wird, so dass beide Motoren auf derselben Verbrauchskennlinie arbeiten.

In der DD 200 234 A1 wird vorgeschlagen, die Drehzahl des Verbrennungsmotors eines Mähdreschers bei einer Straßenfahrt gegenüber der Drehzahl beim Erntebetrieb herabzusetzen, wobei die Straßenfahrt anhand der zugehörigen Übersetzungsstufe eines Schaltgetriebes erkannt wird. Beide Drehzahlen sind fest vorgegeben.

Die EP 1 052 388 A2 schlägt vor, die Drehzahl des Verbrennungsmotors einer selbstfahrenden Erntemaschine bei einer Straßenfahrt anhand der vorgegebenen Fahrgeschwindigkeit einzustellen. Die Straßenfahrt wird anhand der Stellung eines Arbeitsorgans erkannt, die bei der Straßenfahrt jeweils anders als im Arbeitsbetrieb ist. Bei stehender Erntemaschine ist die Motordrehzahl geringer als bei fahrender Erntemaschine.

Im Stand der Technik ist es demnach bekannt, die Drehzahl und die Leistung des Verbrennungsmotors einer selbstfahrenden Erntemaschine möglichst konstant zu halten, was durch eine automatische Variation der Vortriebsgeschwindigkeit erfolgt (DE 35 05 887 A1, EP 1 419 687 A1, EP 0 901 928 A2), oder die Vortriebsgeschwindigkeit konstant zu halten und die Drehzahl des Verbrennungsmotors zu variieren (EP 1 609 349 A1). Außerdem ist es gebräuchlich, die Drehzahl des Verbrennungsmotors zu variieren, um die abgegebene Leistung an unterschiedliche Erntegutdurchsätze anzupassen. Dabei wird die Drehzahl des Verbrennungsmotors gegenüber der Nenndrehzahl vermindert, wenn eine gegenüber der Nennleistung verminderte Ausgangsleistung abzugeben ist (vgl. EP 1 232 682 A1, EP 1 236 389 A1, EP 1 275 290 A1 und DE 10 2007 004 576 A1). Insbesondere beim Erntebetrieb ergibt sich dabei jedoch der Nachteil, dass die Drehzahl der Erntegutbearbeitungselemente mit absinkt, wenn sie nicht über aufwändige Getriebe mit von der Drehzahl des Verbrennungsmotors unabhängiger, konstanter Drehzahl angetrieben werden, was aber zu nicht immer optimaler Erntegutbearbeitung und Erntegutförderung führt. Eine selbsttätige Absenkung der Drehzahl abhängig von einer erkannten Betriebsart der Erntemaschine wurde bisher nur im Straßenfahrbetrieb vorgeschlagen (DD 200 234 A1, EP 1 052 388 A2). Es wäre aber auch im Erntebetrieb sinnvoll, die Drehzahl des Verbrennungsmotors gegenüber der bei Volllastbetrieb gewählten Drehzahl abzusenken, wenn die Erntemaschine beispielsweise im Vorgewende dreht oder steht, um auf ein Transportfahrzeug zu warten, auf das Erntegut überladen werden soll.

### Aufgabe der Erfindung

Die der Erfindung zu Grunde liegende Aufgabe wird darin gesehen, ein Antriebssystem für eine Erntemaschine zu schaffen, das im Erntebetrieb möglichst Kraftstoff sparend arbeitet.

### Lösung

Diese Aufgabe wird erfindungsgemäß durch die Lehre des Patentanspruches 1 gelöst, wobei in den weiteren Patentansprüchen Merkmale aufgeführt sind, die die Lösung in vorteilhafter Weise weiterentwickeln.

Eine selbstfahrende Erntemaschine, bei der es sich beispielsweise um einen selbstfahrenden Mähdrescher, Feldhäcksler, Baumwollpflücker oder eine selbstfahrende Mähmaschine handeln kann, umfasst einen Verbrennungsmotor und eine elektronische Steuereinrichtung, die mit dem Verbrennungsmotor gekoppelt ist und die Drehzahl des Verbrennungsmotors vorgeben kann. Die Steuereinrichtung wird mit einer Information versorgt, ob sich die Erntemaschine im Straßenfahrbetrieb oder im Erntebetrieb befindet. Falls sich die Erntemaschine im Erntebetrieb befindet, gibt die Steuereinrichtung in einer Automatikbetriebsart die Drehzahl des Verbrennungsmotors abhängig von einer durch die Steuereinrichtung selbsttätig erkannten Erntebetriebssituation der Erntemaschine vor.

Es wird demnach die Steuereinrichtung darüber informiert, ob sich die Erntemaschine gerade beim Erntebetrieb befindet oder nicht, was mittels eines an sich bekannten Schalters erfolgen kann, mit dem die Erntemaschine zwischen Straßen- und Erntebetrieb umgeschaltet wird (s. EP 1 523 872 A1), oder anhand der Stellung von Arbeitsorganen der Erntemaschine, anhand derer entschieden werden kann, ob sich die Erntemaschine gerade bei der Ernte oder bei einer Straßenfahrt befindet, wie in der EP 1 052 388 A2 beschrieben. Befindet sich die Erntemaschine nun im Erntebetrieb, wird die aktuelle Erntebetriebssituation erkannt, was insbesondere aufgrund von Bedienereingaben und/oder durch die Bedienereingaben beeinflussten Stellgrößen erfolgt, die zur Steuerung des Vortriebs und des Erntebetriebs der Erntemaschine dienen. Auf diese Weise wird ein Stillstand, eine Leerfahrt ohne Erntegutaufnahme oder im Vorgewende, oder der eigentliche Erntebetrieb erkannt. Die Erfassung der Erntebetriebssituation erfolgt insbesondere unabhängig von Sensoren zur Erfassung des Durchsatzes, obwohl derartige Sensoren auch Verwendung finden können, beispielsweise um zu erkennen, ob beim Befahren des Vorgewendes noch Erntegut in der Erntemaschine vorhanden ist oder nicht. Die Drehzahl des Verbrennungsmotors wird entsprechend der erkannten Erntebetriebssituation vorgegeben. So wird zum Beispiel im Stillstand (der anhand der aktuellen Vortriebsgeschwindigkeit, deren Soll- und/oder Istwert erfasst wird, erkennbar ist) eine Leerlaufdrehzahl ausgewählt oder der Verbrennungsmotor nach einer bestimmten Zeit angehalten, bei der Leerfahrt (die anhand der aktuellen Vortriebsgeschwindigkeit, deren Soll- und/oder Istwert erfasst wird und/oder der Position eines Erntevorsatzes und/oder der Betriebsart eines Einzugsförderers erkennbar ist) eine konstante oder veränderbare Drehzahl zwischen der Leerlaufdrehzahl und einer maximalen Drehzahl ausgewählt, insbesondere solange sich kein Erntegut mehr in der Erntemaschine befindet (dann wird eine höhere Drehzahl ausgewählt oder beibehalten, um ein ordnungsgemäßes Abfördern des Ernteguts zu gewährleisten), und beim Erntebetrieb (der anhand der aktuellen Vortriebsgeschwindigkeit, deren Soll- und/oder Istwert erfasst wird, und einer Information hinsichtlich einer geschlossenen Stellung einer Kupplung im Antriebsstrang der für den Erntebetrieb benötigten Arbeitsorgane erkennbar ist) die maximale Drehzahl oder eine etwas darunter liegende Drehzahl verwendet, die insbesondere eine maximale Leistungsabgabe ermöglicht oder einem lokalen Minimum des spezifischen Kraftstoffverbrauchs entspricht.

Die maximale (oder eine durch den Bediener für den Erntebetrieb auswählbare) Drehzahl des Verbrennungsmotors wird insbesondere dann verwendet, wenn die Erntemaschine in ein abzuemtendes Feld einfährt, um zu erreichen, dass die Emtegutfördereinrichtungen, insbesondere die stromab einer Häckseltrommel angeordnete Fördervorrichtung eines Feldhäckslers, mit möglichst hoher Drehzahl arbeiten, um den in dieser Erntebetriebssituation geringen Erntegutdurchsatz ordnungsgemäß, d. h. ohne Verstopfungen, abfördern zu können. Diese Erntebetriebssituation ist an der aktuellen Vortriebsgeschwindigkeit, deren Soll-und/oder Istwert erfasst wird, und einer Information hinsichtlich einer geschlossenen Stellung einer Kupplung im Antriebsstrang der für den Erntebetrieb benötigten Arbeitsorgane und/oder der Betriebsart eines Einzugsförderers erkennbar, wobei zusätzlich der Beginn des Erntebetriebs anhand des nur eine bestimmte Zeitspanne zurückliegenden Zeitpunkts des Schließens der Kupplung erkannt wird.

Wenn nach dem Einfahren in das Feld eine vergrößerte Belastung des Verbrennungsmotors vorliegt, ist von einem normalen Erntebetrieb auszugehen, so dass die Steuereinrichtung dann eine unterhalb der maximalen Drehzahl liegende Drehzahl ausgewählt wird. Dabei wird vorzugsweise die Drehzahl des Verbrennungsmotors bei steigender Belastung zunächst konstant gelassen, bis ein bestimmter, erster Leistungswert erreicht ist. Bei weiter steigender Belastung wird die Drehzahl kontinuierlich, insbesondere linear von der Belastung abhängig, vermindert, bis bei einem zweiten Leistungswert ein Drehzahlwert erreicht ist, der einer maximalen abgebbaren Leistung oder einem lokalen Minimum des spezifischen Kraftstoffverbrauchs entspricht. Bei weiter ansteigender Belastung bleibt die Drehzahl dann konstant, bis eine maximale Belastung erreicht ist. Sollte die Belastung ausgehend von einer der maximalen abgebbaren Leistung des Verbrennungsmotors noch weiter ansteigen, wird entweder die Drehzahl zwangsweise aufgrund der Kennlinie des Verbrennungsmotors absinken, oder die Steuereinrichtung veranlasst in einer entsprechenden Drehzahlbegrenzungsbetriebsart, die durch den Bediener ausgewählt werden kann, dass die Vortriebsgeschwindigkeit der Erntemaschine herabgesetzt wird.

Wenn die Belastung, ausgehend von einer der maximalen abgebbaren Leistung des Verbrennungsmotors oder einem lokalen Minimum des spezifischen Kraftstoffverbrauchs entsprechenden Drehzahl hingegen wieder absinkt, wird diese Drehzahl ebenfalls zunächst beibehalten, bis die Belastung bis auf einen dritten Leistungswert abgesunken ist. Bei weiter sinkender Belastung wird die Drehzahl kontinuierlich, insbesondere linear, angehoben, bis ein vierter Leistungswert erreicht ist, bei dem auch die maximale Drehzahl erreicht ist. Sinkt die Belastung dann noch weiter ab, wird die maximale Drehzahl beibehalten. Vorzugsweise ist der dritte Leistungswert kleiner als der zweite Leistungswert und der vierte Leistungswert kleiner als der erste Leistungswert. Demnach wird bei der Drehzahlsteuerung eine Hysterese verwendet, die bei ansteigender Belastung höhere Drehzahlen als bei absinkender Belastung ansteuert. Dadurch wird beispielsweise eine ordnungsgemäße Funktion einer stromab einer Häckseltrommel angeordneten Fördervorrichtung eines Feldhäckslers gewährleistet. Außerdem wird die maximale Drehzahl des Verbrennungsmotors ausgewählt, wenn sich eine Austrageinrichtung eines Feldhäckslers in einer nach hinten gerichteten Stellung befindet. Dadurch erreicht man die in dieser Erntebetriebssituation erforderliche, hohe Wurfweite des Ernteguts über einen der Erntemaschine folgenden Traktor hinaus bis auf den vom Traktor gezogenen Anhänger, ohne dass ein verstellbares Getriebe zum Antrieb der Fördervorrichtung oder ein verstellbarer Abstand zwischen dem Gebläse der Fördervorrichtung und einer benachbarten Wand erforderlich wäre.

Die Steuereinrichtung hebt vorzugsweise bei unterhalb eines bestimmten Schwellenwerts liegenden Emtegutdurchsätzen die Drehzahl des Verbrennungsmotors über einen Wert der Drehzahl an, der einer maximalen abgebbaren Leistung oder einem minimalen spezifischen Kraftstoffverbrauch entspricht, um eine ordnungsgemäße Abförderung des Ernteguts zu erreichen.

Vorzugsweise ist im Erntebetrieb ein Effizienzmodus auswählbar, in welchem die Steuereinrichtung die Vortriebsgeschwindigkeit der Erntemaschine und die Drehzahl des Verbrennungsmotors derart kontrolliert, dass der Verbrennungsmotor bei einem Arbeitspunkt hinsichtlich der Drehzahl und Belastung betrieben wird, der einem lokalen Minimum des spezifischen Kraftstoffverbrauchs des Verbrennungsmotors entspricht. Es wird demnach ausgenutzt, dass das Kennlinienfeld eines Verbrennungsmotors in der Regel in der Nähe oder bei einer der Drehzahl der maximalen Leistung entsprechenden Drehzahl, jedoch unterhalb der maximalen Leistung liegend, ein lokales Minimum des spezifischen Kraftstoffverbrauchs aufweist. Auf diese Weise wird der Kraftstoffverbrauch der Erntemaschine optimiert.

Wenn die Steuereinrichtung die Vortriebsgeschwindigkeit der Erntemaschine kontrolliert, bietet es sich an, dem Bediener eine Möglichkeit zur Übersteuerung der Vortriebsgeschwindigkeit zu geben. Daher wird vorgeschlagen, die Steuereinrichtung mit einem Sensor zur Erfassung der Position einer durch den Bediener verstellbaren Geschwindigkeitsvorgabeeinrichtung zu verbinden, bei der es sich insbesondere um einen Fahrhebel oder ein Gaspedal handeln kann. Die Steuereinrichtung übergibt dann an den Fahrantrieb ein Geschwindigkeitssignal, das der kleineren der mit der Geschwindigkeitsvorgabeeinrichtung und der von der Steuereinrichtung bestimmten Geschwindigkeit entspricht.

Die Erntemaschine kann einen einzigen Verbrennungsmotor aufweisen, oder zwei oder mehr Verbrennungsmotore, deren Kurbelwellen bei entsprechendem Leistungsbedarf miteinander gekoppelt werden können, so dass sie jeweils mit gleichen Drehzahlen laufen. Vorzugsweise verwendet die Steuereinrichtung bei gleichartigen Verbrennungsmotoren auch jeweils dieselben Arbeitspunkte auf dem Kennlinienfeld, d. h. sie werden mit jeweils derselben Leistung betrieben, insbesondere bei Verbrennungsmotoren der Norm Euro 4, oder einer der Verbrennungsmotoren wird mit nahezu der Maximalleistung betrieben, während die Leistung des anderen Verbrennungsmotors dem jeweiligen Leistungsbedarf entspricht, was bei Verbrennungsmotoren der Norm Euro 3 sinnvoll sein kann. Falls Verbrennungsmotore unterschiedlicher Leistungen miteinander kombiniert werden, wird zweckmäßigerweise jeweils die verbrauchsgünstigste Kombination der Arbeitspunkte auf den Kennlinienfeldem angesteuert.

### Ausführungsbeispiel

Anhand der Abbildungen wird ein Ausführungsbeispiel der Erfindung erläutert. Es zeigen:
- Fig. 1: eine schematische seitliche Ansicht einer selbstfahrenden Erntemaschine in Form eines Feldhäckslers,
- Fig. 2: eine schematische Draufsicht auf das Antriebssystem der Erntemaschine aus Figur 1,
- Fig.3: ein Flussdiagramm hinsichtlich der Auswahl der unterschiedlichen Betriebsarten der Steuereinrichtung,
- Fig. 4: ein Flussdiagramm zur Automatikbetriebsart der Steuereinrichtung, und
- Fig. 5: ein Diagramm des Kennlinienfelds der Verbrennungsmotore der Erntemaschine und der von der Steuereinrichtung verwendeten Kurve.

### Aufbau der Erntemaschine

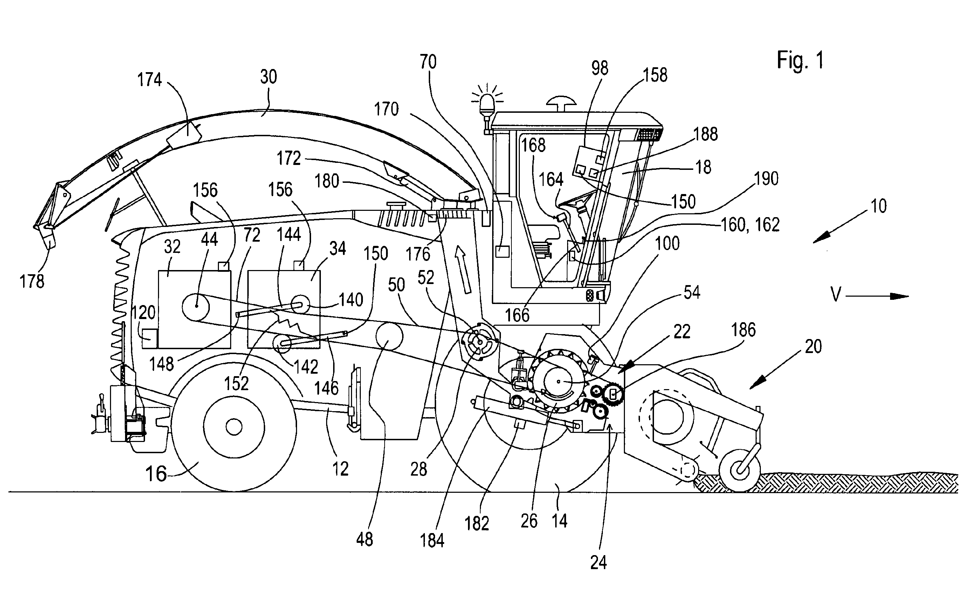

In der Figur 1 ist eine Erntemaschine 10 in der Art eines selbstfahrenden Feldhäckslers in schematischer Seitenansicht dargestellt. Die Erntemaschine 10 baut sich auf einem Rahmen 12 auf, der von vorderen angetriebenen Rädern 14 und lenkbaren rückwärtigen Rädern 16 getragen wird. Die Bedienung der Erntemaschine 10 erfolgt von einer Fahrerkabine 18 aus, von der aus ein Erntevorsatz 20 in Form eines Aufnehmers einsehbar ist, der auch durch einen Mähvorsatz zur Maisernte ersetzt werden könnte. Mittels des Erntevorsatzes 20 vom Boden aufgenommenes Erntegut, z. B. Gras oder dergleichen wird über einen Einzugsförderer 22 mit Vorpresswalzen, die innerhalb eines Einzugsgehäuses 24 an der Frontseite des Feldhäckslers 10 angeordnet sind, einer unterhalb der Fahrerkabine 18 angeordneten Häckseleinrichtung 26 in Form einer Häckseltrommel zugeführt, die es in kleine Stücke häckselt und es einer Fördervorrichtung 28 aufgibt. Die Häckseleinrichtung 26 und die Fördervorrichtung 28 sind demnach Arbeitsorgane zur Förderung bzw. Bearbeitung von Erntegut. Das Gut verlässt die Erntemaschine 10 zu einem nebenher fahrenden Transportfahrzeug über eine um eine etwa vertikale Achse drehbaren und in der Neigung verstellbare Austrageinrichtung 30 in Form eines Auswurfkrümmers. Im Folgenden beziehen sich Richtungsangaben, wie seitlich, unten und oben, auf die Vorwärtsrichtung V der Erntemaschine 10, die in der Figur 1 nach rechts verläuft.

### Antriebsanordnung

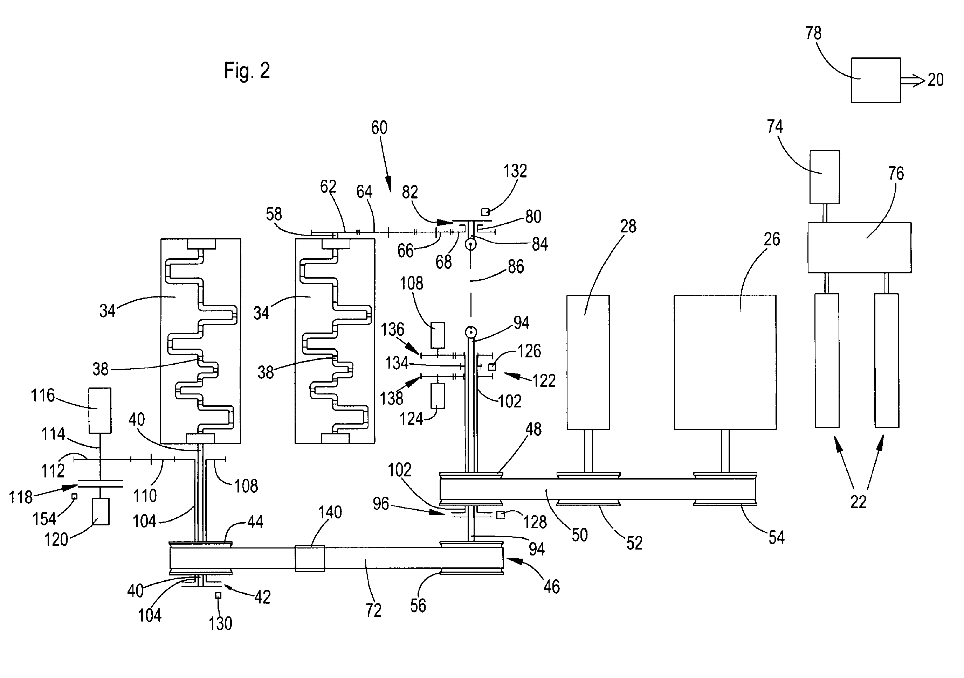

Die Figur 2 zeigt eine Draufsicht auf die Antriebsanordnung der Erntemaschine 10. Im rückwärtigen Bereich der Erntemaschine 10 befinden sich zwei Verbrennungsmotoren 32, 34, die getrennt voneinander mit Längsträgern und/oder Querträgern des Rahmens 12 verbunden sind. Die Verbrennungsmotoren 32, 34 sind vorzugsweise als Dieselmotor ausgeführt und umfassen in der Regel getrennte Öl- und Kühlkreisläufe sowie Anlasser. Ihr Leistungsvermögen ist vorzugsweise gleich, obwohl es auch unterschiedlich sein könnte. Der hintere, erste Verbrennungsmotor 32 und seine (erste) Kurbelwelle 36 erstrecken sich quer zur Vorwärtsrichtung V der Erntemaschine 10. Der vordere, zweite Verbrennungsmotor 34 und seine (zweite) Kurbelwelle 38 erstrecken sich ebenfalls quer zur Vorwärtsrichtung V der Erntemaschine 10, sind aber gegenüber dem ersten Verbrennungsmotor 32 um 180° um die Hochachse gedreht.

Die erste Kurbelwelle 36 ist starr mit einer Ausgangswelle 40 verbunden, die wiederum mit der Eingangsseite einer ersten Kupplung 42 gekoppelt ist. Die Ausgangsseite der ersten Kupplung 42 ist über eine Hohlwelle 104 starr mit einer Antriebsscheibe 44 eines ersten Riementriebs 46 verbunden, dessen Abtriebsscheibe 56 starr mit einer koaxialen Querwelle 94 gekoppelt ist. Um die Antriebsscheibe 44 und die Abtriebsscheibe 56 des ersten Riementriebs 46 erstreckt sich ein erster Treibriemen 72. Die erste Kupplung 42, die Antriebsscheibe 44 und die Ausgangswelle 40 sind koaxial zueinander angeordnet und ihre Achsen erstrecken sich horizontal und quer zur Vorwärtsrichtung. Der erste Riementrieb 46 erstreckt sich demnach vom ersten Verbrennungsmotor 32 nach vorn zur Querwelle 94. Die erste Kupplung 42 befindet sich auf der von der Längsmittelebene der Erntemaschine 10 abgewandten Seite der Antriebsscheibe 44.

Die Ausgangswelle 58 des zweiten Verbrennungsmotors 34 ist über ein Stirnzahnradgetriebe 60 mit insgesamt vier Zahnrädern 62 bis 68, deren Drehachsen sich horizontal und quer zur Vorwärtsrichtung V erstrecken, mit einer Hohlwelle 80 verbunden, an deren Außenseite sich die Eingangsseite einer zweiten Kupplung 82 befindet. Das Stirnzahnradgetriebe 60 könnte auch durch einen zweiten Riementrieb (nicht gezeigt) ersetzt werden, der eine Antriebsverbindung zwischen der Ausgangswelle 58 und der Hohlwelle 80 bzw. der Eingangsseite der zweiten Kupplung 82 herstellt. Die Ausgangsseite der zweiten Kupplung 82 ist mit einer sich horizontal und quer zur Vorwärtsrichtung V erstreckenden Welle 84 verbunden, die sich durch die Hohlwelle 80 erstreckt und mit der Eingangsseite einer Gelenkwelle 86 verbunden ist, die sich ebenfalls horizontal und quer zur Vorwärtsrichtung V erstreckt. Die Gelenkwelle 86 ist ausgangsseitig wiederum mit der Querwelle 94 verbunden.

Die Querwelle 94 ist auf der der Längsmittelebene der Erntemaschine 10 benachbarten Seite der Abtriebsscheibe 56 starr mit der Eingangsseite einer dritten Kupplung 96 verbunden, deren Ausgangsseite mit einer weiteren Hohlwelle 102 gekoppelt ist, welche die Querwelle 94 umschließt und sich koaxial dazu erstreckt. Die Querwelle 94 ist auf der der Längsmittelebene der Erntemaschine 10 benachbarten Seite der dritten Kupplung 96 drehfest mit einer Riemenscheibe 48 gekoppelt. Die Riemenscheibe 48 wird von einem zweiten Treibriemen 50 umschlungen, der auch eine Riemenscheibe 52 für den Antrieb der Fördereinrichtung 28 und eine Riemenscheibe 54 zum Antrieb der Häckseleinrichtung 26 umschlingt. Der zweite Treibriemen 50 kann in seinem rücklaufenden, oberen Trum zwischen den Riemenscheiben 48 und 52 durch eine ihm zugeordnete Spannrolle (nicht gezeigt) gespannt werden. Der Antrieb einer zwischen der Häckseleinrichtung 26 und der Fördervorrichtung 28 angeordneten Körnerprozessoranordnung 104 erfolgt vorzugsweise über einen weiteren Riemenantrieb (nicht gezeigt) von der Welle 106 der Riemenscheibe 52 her.

Die Hohlwelle 104 erstreckt sich auch auf der der Längsmittelebene der Erntemaschine 10 zugewandten Seite der Antriebsscheibe 44 und trägt dort ein am Umfang verzahntes Zahnrad 108, das mit einem weiteren Zahnrad 110 kämmt, welches über ein drittes Zahnrad 112 eine quer angeordnete Welle 114 ein Pumpenaggregat 116 antreibt, das zur Versorgung der Hydromotoren zum Antrieb der Räder 14, 16 und eines Reversiermotors 108 dient. Die Welle 114 steht über eine vierte Kupplung 118 auch mit einer Pumpe 120 für die hydraulische Versorgung eines Hydromotors 78 für den Antrieb des Erntevorsatzes 20 in Antriebsverbindung.

Die Hohlwelle 102 steht über ein Schaltgetriebe 122 wahlweise mit dem Reversiermotor 62 oder einer Hydropumpe 124 mit vorzugsweise verstellbarem Schluckvolumen in Antriebsverbindung. Das Schaltgetriebe 122 ist durch einen fremdkraftbetätigten Aktor 126, der insbesondere hydraulisch, pneumatisch oder elektromagnetisch betätigbar ist, mit einer Steuereinrichtung 70 verbunden, die auch einen Aktor 128 zur Betätigung der dritten Kupplung 96, einen Aktor 130 zur Betätigung der ersten Kupplung 42 und einen Aktor 132 zur Betätigung der zweiten Kupplung 86 kontrolliert. Die Hydropumpe 124 ist hydraulikfluidleitend mit einem Hydromotor 74 verbunden, der ein festes oder verstellbares Schluckvolumen aufweist und über ein Getriebe 76 die Vorpresswalzen des Einzugsförderers 22 antreibt. Das Schaltgetriebe 122 umfasst eine drehfest mit der Hohlwelle 102 verbundene, aber durch den Aktor 126 in axialer Richtung auf der Hohlwelle 102 verschiebbare Muffe 134, die durch den Aktor 126 wahlweise mit einem Zahnradpaar 136 zum Antrieb des Reversiermotors 108 oder einem Zahnradpaar 138 zum Antrieb der Hydropumpe 124 in Antriebsverbindung gebracht werden kann.

Die Übersetzungsverhältnisse des ersten Riementriebs 46 und des Stirnzahnradgetriebes 60 sind vorzugsweise identisch, um gleiche Drehzahlen der Verbrennungsmotore 32, 34 zu erzielen. Sie können jeweils 1:1 sein, aber auch von einem Übersetzungsverhältnis von 1:1 abweichen, um eine gewünschte Drehzahl an der Riemenscheibe 48 und an der Häckseleinrichtung 26 und der Fördervorrichtung 28 zu erzielen.

Da der erste Riementrieb 46 bei abgeschaltetem ersten Verbrennungsmotor 32 die Leistung nicht von hinten nach vorn, sondern in umgekehrter Richtung von der Querwelle 94 zum Pumpenaggregat 116 transportieren muss, kann das untere oder obere Trum des ersten Treibriemens 72 zur Leistungsübertragung dienen, während dann das andere Trum jeweils als Leertrum wirkt. Um dieser Tatsache Rechnung zu tragen, sind dem ersten Riementrieb 46 zwei Spannrollen 140, 142 zugeordnet, die an getrennten Halterungen 144, 146 befestigt sind, welche um sich horizontal und quer zur Vorwärtsrichtung erstreckende Achsen 148, 150 frei schwenkbar ist. Die Halterungen 144, 146 sind durch die Kraft einer Feder 152 und/oder eines Hydraulikzylinders (nicht gezeigt) gegeneinander vorgespannt. Die Achsen 148 und 150 befinden sich bezüglich der Laufrichtung des Treibriemens 72 jeweils vor den Spannrollen 140 und 142. Es ist offensichtlich, dass die Anordnung mit den zwei Spannrollen 140, 142 auch bei Antriebssystemen anwendbar ist, bei denen der zweite Verbrennungsmotor 34 die Riemenscheibe 48 nicht über eine Gelenkwelle 86, sondern auf beliebige andere Weise antreibt (z. B. ein reines Zahnradgetriebe, einen zweiten Riementrieb etc.).

### Funktionsweise der Antriebsanordnung

Die Funktionsweise des in den Figuren 1 und 2 dargestellten Antriebssystems ist derart, dass der Bediener im Arbeitsbetrieb über eine in der Fahrerkabine 18 angeordnete Bedienereingabeeinrichtung 98 der Steuereinrichtung 70 mitteilen kann, ob einer oder beider der Verbrennungsmotoren 32, 34 benötigt werden. Diese Auswahl kann im Erntebetrieb auch anhand einer Leistungsmessung erfolgen, die mittels eines Drehmomentsensors innerhalb des Antriebsstrangs der Häckseleinrichtung 26 durchgeführt wird oder Motorsteuerungen 156 der Verbrennungsmotoren 32, 34 geben der Steuereinrichtung 70 eine Information hinsichtlich der von den Verbrennungsmotoren 32, 34 jeweils abgegebenen Leistung oder es wird die Art des Erntevorsatzes 20 erfasst oder der Erntegutdurchsatz gemessen. Bei einem hinreichend niedrigen Leistungsbedarf, der kleiner als die Nennleistung eines der Verbrennungsmotoren 32, 34 ist, wird nur jeweils ein Verbrennungsmotor 32 oder 34 in Betrieb versetzt, während der andere stillsteht. Es wird dabei vorzugsweise selbsttätig der Verbrennungsmotors ausgewählt, der die geringere Kraftstoffmenge verbrannt hat oder den geringeren Verschmutzungsgrad im Motoröl aufweist, was mittels eines geeigneten Sensors festgestellt werden kann (s. DE 102 25 716 A1). Die Auswahl des Verbrennungsmotors kann auch anhand der in der DE 10 2006 004 143 A1 erwähnten Kriterien erfolgen. Sind die Leistungsvermögen der beiden Verbrennungsmotoren 32, 34 unterschiedlich, wird bei der Auswahl des Verbrennungsmotors 32 oder 34 auch die abzugebende Leistung berücksichtigt, so dass bei einem Leistungsbedarf, der oberhalb des Leistungsvermögens des schwächeren Verbrennungsmotors 32 oder 34 und unterhalb des Leistungsvermögens des stärkeren Verbrennungsmotors 34 oder 32 liegt, der stärkere Verbrennungsmotor 34 oder 32 ausgewählt wird. Weiterhin wird bei einer Straßenfahrt, die anhand einer entsprechenden Eingabe mittels eines zum Umschalten zwischen Straßenfahrbetrieb und Erntebetrieb dienenden Schalters 158 der Eingabeeinrichtung 98 in die Steuereinrichtung 70 auswählbar ist, selbsttätig nur ein einziger Verbrennungsmotor 32 oder 34 in Betrieb versetzt.

Falls nur der erste Verbrennungsmotor 32 in Betrieb zu setzen ist, veranlasst die Steuereinrichtung 70 den Aktor 130, die erste Kupplung 42 zu schließen und den Aktor 132, die zweite Kupplung 82 zu öffnen. Demnach treibt dann der laufende erste Verbrennungsmotor 32 über den ersten Riementrieb 46 die Querwelle 94 an, so dass sich auch die Gelenkwelle 86 mitdreht.

Falls analog nur der zweite Verbrennungsmotor 34 in Betrieb zu setzen ist, veranlasst die Steuereinrichtung 70 den Aktor 130, die erste Kupplung 42 zu öffnen und den Aktor 132, die zweite Kupplung 82 zu schließen. Demnach treibt dann der laufende zweite Verbrennungsmotor 34 über die Gelenkwelle 86 die Querwelle 94 an. Der erste Riementrieb 46 läuft dann frei mit.

Im Straßenfahrbetrieb veranlasst die Steuereinrichtung 70 den Aktor 128, die dritte Kupplung 96 zu öffnen und einen Aktor 154, die Kupplung 118 zu öffnen. Demnach werden im Straßenfahrbetrieb weder die Riemenscheibe 48 für den Treibriemen 50 noch die Hohlwelle 102 noch die Pumpe 120 angetrieben. Es drehen sich aber der erste Riementriebe 46 und die Gelenkwelle 86 und das Pumpenaggregat 116 wird angetrieben, so dass alle für die Straßenfahrt benötigten Elemente angetrieben werden, während die für den Erntebetrieb benötigten Arbeitsorgane stillstehen.

Im Erntebetrieb veranlasst die Steuereinrichtung 70 den Aktor 128, wenn der Schalter 98 sich in der Erntebetriebsstellung befindet, und ein weiterer Schalter 188, der als Betriebsschalter für die Erntegutaufnahme- und -bearbeitungsorgane dient, eingeschaltet ist, die dritte Kupplung 96 und die Kupplung 118 zu schließen, so dass dann auch die Pumpe 120 und somit der Hydromotor 78 für den Antrieb des Erntevorsatzes 20, die Riemenscheibe 48 und somit die Fördervorrichtung 28 und die Häckseleinrichtung 26 und die Hohlwelle 102 in Bewegung versetzt werden. Im normalen Erntebetrieb veranlasst die Steuereinrichtung 70 den Aktor 126, das Schaltgetriebe 122 in eine Stellung zu verbringen, in welcher die Hydropumpe 124 und somit der Hydromotor 74 zum Antrieb des Einzugsförderers 22 angetrieben werden. Bei einem Erntegutstau kann der Hydromotor 74 reversiert werden, indem seine Taumelscheibe entsprechend verstellt wird. Um die Messer der Häckseleinrichtung 26 mittels einer Schleifeinrichtung 100 rückwärts drehend zu schleifen, kann die Steuereinrichtung 70 bei getrennter dritter Kupplung 96 das Schaltgetriebe 122 in eine Stellung bringen, in welcher der Reversiermotor 108 mit der Hohlwelle 102 in Antriebsverbindung steht und letztere gegensinnig zum normalen Erntebetrieb antreibt.

Falls nur der erste Verbrennungsmotor 32 läuft und nun auch der zweite Verbrennungsmotor 34 benötigt wird, veranlasst die Steuereinrichtung 70, dass letzterer mittels seines Anlassers angelassen, durch seine Motorsteuerung 156 auf die Drehzahl des ersten Verbrennungsmotors 32 gebracht und die zweite Kupplung 82 geschlossen werden. Umgekehrt veranlasst die Steuereinrichtung 70, falls nur der zweite Verbrennungsmotor 34 läuft und nun auch der erste Verbrennungsmotor 32 benötigt wird, dass letzterer mittels seines Anlassers angelassen, durch seine Motorsteuerung 156 auf die Drehzahl des zweiten Verbrennungsmotors 34 gebracht und die erste Kupplung 42 geschlossen werden. Analog kann die Steuereinrichtung 70 bei absinkenden Leistungsanforderungen veranlassen, dass der erste oder zweite Verbrennungsmotor 32 oder 34 unter Anwendung der oben erwähnten Kriterien ausgeschaltet wird, indem die erste Kupplung 42 durch den Aktor 130 oder die zweite Kupplung 82 durch den Aktor 132 zur Öffnung veranlasst werden, und anschließend die Motorsteuerung 156 des abzuschaltenden Verbrennungsmotors 32 oder 34 veranlasst wird, den Kraftstoffzufluss abzustellen.

### Drehzahlvorgabe der Verbrennungsmotore

Die Steuereinrichtung 70 dient weiterhin zur Vorgabe der Drehzahl der Verbrennungsmotore 32, 34 im Straßenfahrbetrieb und im Erntebetrieb. Die Steuereinrichtung 70 ist zu diesem Zweck mit einem Sensor 160 zur Erfassung der Position einer Geschwindigkeitsvorgabeeinrichtung 164 in Form eines Fahrhebels verbunden, welche um eine sich horizontal und quer zur Vorwärtsrichtung V erstreckende Drehachse 166 verschwenkbar innerhalb der Fahrerkabine 18 angeordnet ist und zur Vorgabe der Vortriebsgeschwindigkeit der Erntemaschine 10 durch den Bediener dient. Die Geschwindigkeitsvorgabeeinrichtung 164 wird von einer mittleren Neutralstellung aus nach vorn bewegt, wenn die Erntemaschine 10 nach vorn fahren soll, und von der Neutralstellung aus nach hinten bewegt, wenn die Erntemaschine 10 rückwärts fahren soll. Ein Sensor 162 ist mit der Steuereinrichtung 70 verbunden und erfasst, ob sich die Geschwindigkeitsvorgabeeinrichtung 164 in der Neutralstellung befindet, in welcher die Erntemaschine 10 steht.

Am oberen Ende der Geschwindigkeitsvorgabeeinrichtung 164 befindet sich an der dem Bediener zugewandten Fläche ein durch den Bediener betätigbares Tastenfeld 168, mit dem Aktoren 170, 172, 174 betätigt werden können, die zur Verstellung der Austrageinrichtung 30 dienen, wobei der Aktor 170 die Austrageinrichtung 30 um einen Drehkranz 176 um die Hochachse dreht, der Aktor 172 die Austrageinrichtung 30 gegenüber dem Drehkranz 176 um eine horizontale Achse verschwenkt und demnach die Höhe des Auswurfendes variiert, und der Aktor 174 eine Auswurfklappe 178 verstellt. Die Position der Austrageinrichtung 30 um die Hochachse, die mittels des Aktors 170 veränderbar ist, wird mittels eines Sensors 180 erfasst, bei dem es sich um ein Potentiometer oder eine Kodierscheibe mit einer Lichtschranke handeln kann. Der Sensor 180 ist mit der Steuereinrichtung 70 verbunden.

Weiterhin ist die Steuereinrichtung 70 mit einem Sensor 182 verbunden, der die mittels eines Hydraulikzylinders 184 veränderbare Höhe des Erntevorsatzes 20 über dem Boden (bzw. die Stellung des Hydraulikzylinders 184, die ein Maß für die Höhe des Erntevorsatzes 20 über dem Boden ist) erfasst. Die Steuereinrichtung 70 ist mit einem weiteren Sensor 186 verbunden, der die Drehzahl der Vorpresswalzen des Einzugsförderers 22 erfasst. Die Steuereinrichtung 70 wird auch mit einem Vortriebsgeschwindigkeitssignal beaufschlagt, das von einem geeigneten Sensor stammen kann, der die Drehzahl eines Rads 14 oder 16 oder im dem Rad 14 oder 16 zugeordneten Antriebsstrang erfasst oder als Radarsensor mit dem Erdboden zusammenwirkt. Wie bereits erwähnt, übergeben die Motorsteuerungen 156 der Steuereinrichtung 70 Signale hinsichtlich der aktuellen Leistungsabgabe der Verbrennungsmotore 32, 34. Da die Steuereinrichtung 70 die dritte Kupplung 96 kontrolliert, bei der es sich um eine nur im Erntebetrieb zu schließende Hauptkupplung handelt, liegt der Steuereinrichtung 70 auch eine Information vor, ob die Kupplung 96 geschlossen ist oder nicht. Die erwähnten Verbindungen zwischen der Steuereinrichtung 70 und den Sensoren 160, 162, 180, 182, 186 sowie der Kupplung 96, der Bedienereingabeeinrichtung 98 und den Motorsteuerungen 156 werden vorzugsweise über einen Bus realisiert, um den Verdrahtungsaufwand in Grenzen zu halten.

### Eingabe der Betriebsart

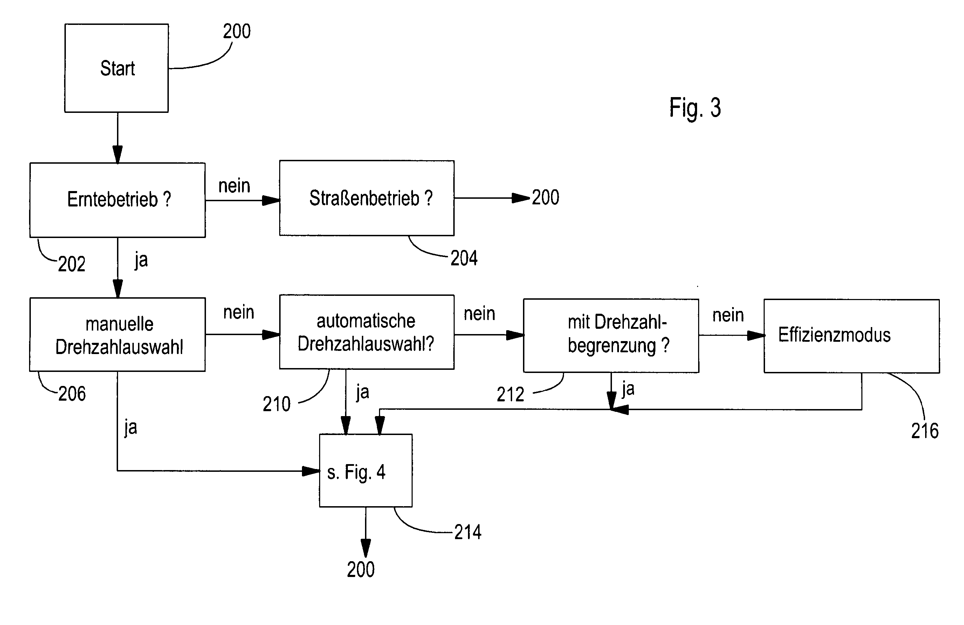

Bei der Kontrolle der Verbrennungsmotore 32, 34 arbeitet die Steuereinrichtung 70 nach dem Flussdiagramm aus Figur 3. Nach dem Start im Schritt 200 wird zunächst im Schritt 202 überprüft, ob der Bediener mittels des Schalters 158 den Straßenfahrbetrieb ausgewählt hat. Ist das der Fall, wählt die Steuereinrichtung im Schritt 204 einen der Verbrennungsmotoren 32 oder 34 aus, wie oben beschrieben, und weist seine Motorsteuerung 156 an, eine geeignete Motordrehzahl einzustellen. Außerdem werden die zum Antrieb der Hydromotoren für die Räder 14, 16 dienende Pumpe im Pumpenaggregat 116 und die Hydromotoren der Räder 14, 16 derart angesteuert, dass eine mit der Geschwindigkeitsvorgabeeinrichtung 164 einstellbare Vortriebsgeschwindigkeit erreicht wird. Hierzu wird auf die Offenbarung der DE 10 2007 058 535 A1 verwiesen. Auf den Schritt 204 folgt wieder der Schritt 200.

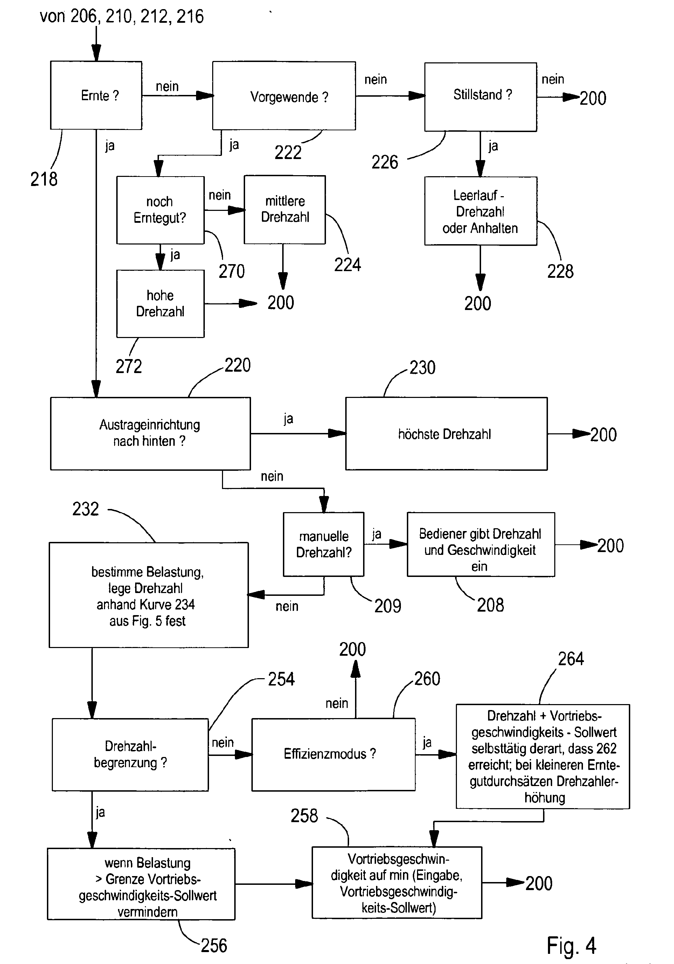

Hat der Schritt 206 ergeben, dass keine manuelle Betriebsart der Drehzahlvorgabe ausgewählt wurde, folgt der Schritt 210, in dem abgefragt wird, ob der Bediener mittels des Schalters 190 eine automatische Drehzahlauswahl ausgewählt hat. Ist das nicht der Fall, folgt der Schritt 212, in dem abgefragt wird, ob der Bediener mittels des Schalters 190 eine automatische Drehzahlauswahl mit Drehzahlbegrenzung ausgewählt hat. Ergibt sich im Schritt 210, dass der Bediener die automatische Drehzahlauswahl ausgewählt hat, oder im Schritt 212, dass der Bediener die automatische Drehzahlauswahl mit Drehzahlbegrenzung ausgewählt hat, folgt in beiden Fällen eine Routine 214, die in der Figur 4 detailliert dargestellt ist. Falls der Schritt 212 ergibt, dass der Bediener die automatische Drehzahlauswahl mit Drehzahlbegrenzung nicht ausgewählt hat, folgt ein Schritt 216, bei dem es sich um einen Effizienzmodus handelt, auf den ebenfalls die Routine 214 folgt.

### Selbsttätige Drehzahleinstellung

Es wird jetzt auf die Figur 4 verwiesen, anhand und in welcher die Routine 214 näher erläutert wird.

### Leerfahrt oder Vorgewende

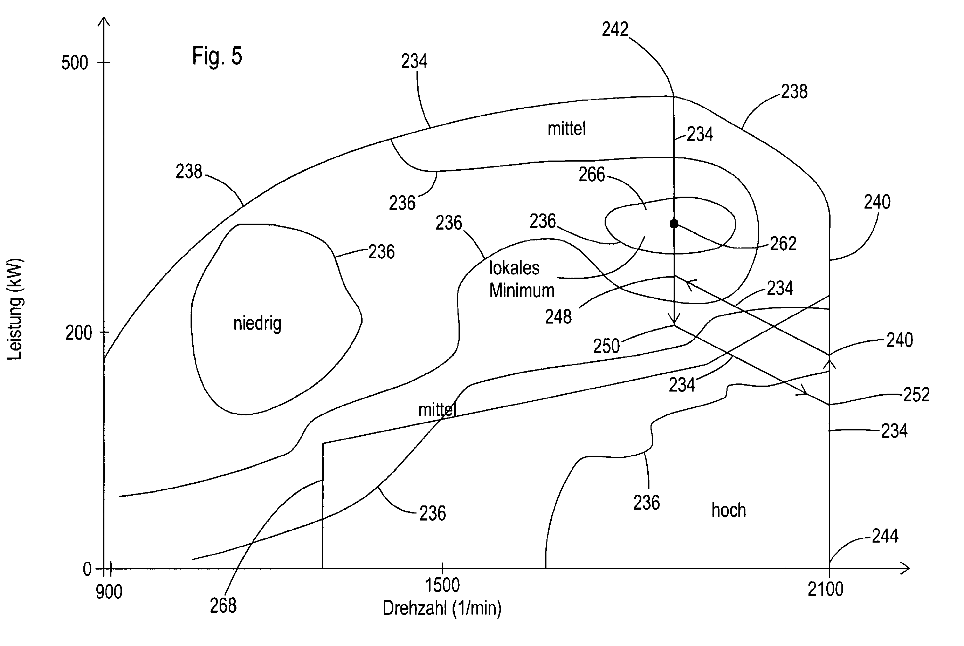

Von den Schritten 206, 210, 212 oder 216 kommend, wird im Schritt 218 zunächst überprüft, ob gerade ein Erntevorgang stattfindet. Dazu kann im Einzelnen geprüft werden, ob sich der Erntevorsatz 20 in einer abgesenkten Ernteposition befindet (Sensor 182), ob der Einzugsförderer 22 aktiv ist (Sensor 186) und ob sich die Geschwindigkeitsvorgabeeinrichtung 164 außerhalb der Neutralposition befindet (Sensor 162). Nur wenn alle drei Bedingungen gleichzeitig erfüllt sind, folgt der Schritt 220, anderenfalls der Schritt 222, in welchem abgefragt wird, ob sich die Erntemaschine 10 gerade im Vorgewende oder bei einer anderen Leerfahrt befindet, bei der kein Erntegut aufgenommen wird. Dazu kann im Einzelnen geprüft werden, ob die Vortriebsgeschwindigkeit gleich null ist oder unterhalb einer Schwelle von beispielsweise 1 km/h liegt (anhand des Vortriebsgeschwindigkeitssignals) oder ob die Kupplung 96 geschlossen ist (anhand des von der Steuereinrichtung 70 kontrollierten Zustands der Kupplung 96). Ist eine oder sind beide der erwähnten Bedingungen erfüllt, folgt der Schritt 270, in dem die Steuerung 70 evaluiert, ob sich noch Erntegut in der Erntemaschine 10 befindet oder befinden kann. Das kann beispielsweise daran erkannt werden, ob seit einem Anheben des Erntevorsatzes 20 mittels des Hydraulikzylinders 184 erst eine bestimmte Zeitspanne vergangen ist, die das Erntegut zum Durchlaufen des Erntevorsatzes 20 und der Erntemaschine 10 benötigt, und/oder es wird durch geeignete Sensoren erfasst, ob sich noch Erntegut in der Erntemaschine befindet, beispielsweise durch Klopfsensoren (s. EP 1 344 444 A1) oder Sensoren zum Erfassen des Abstands von Vorpresswalzen (vgl. DE 199 03 471 C1) oder eine geeignete Kamera mit Bildverarbeitungssystem. Ergibt sich im Schritt 270, dass kein Erntegut mehr vorhanden ist, folgt der Schritt 224, in dem die Steuereinrichtung 70 die Motorsteuerung 156 des jeweils aktiven Motors 32 und/oder 34 veranlasst, eine mittlere Drehzahl des Verbrennungsmotors 32 und/oder 34 einzustellen, die zwischen einer Leerlaufdrehzahl des Verbrennungsmotors 32, 34 und seiner maximalen Drehzahl liegt, beispielsweise bei etwa 1200/min. Die im Schritt 224 gewählte Drehzahl kann ein vorbestimmter, fester Wert sein, oder sie ist innerhalb bestimmter Grenzen variabel und hängt von der aktuellen Belastung der Verbrennungsmotore 32 und/oder 34 ab, welche wiederum in erster Linie durch den Antriebsleistungsbedarf des Fahrantriebs vorgegeben wird, die von der Form des Geländes abhängt. Im Konkreten kann die im Schritt 224 gewählte Drehzahl bei einer abzugebenden Leistung von 0 bis einem ersten Wert (z. B. 100 kW) konstant sein und zwischen 900 und 1500/min liegen. Bei den ersten Wert übersteigenden Leistungsanforderungen steigen dann sowohl die Drehzahl als auch die abgegebene Leistung linear an, wobei die Steigung im oberen Drehzahlbereich noch anwachsen kann. Hierzu wird auf die Kurve 268 im Diagramm der Figur 5 verwiesen, die ein mögliches Beispiel für eine veränderliche Drehzahl der Verbrennungsmotore 32 und/oder 34 wiedergibt. Auf den Schritt 224 folgt wieder der Schritt 200. Falls der Schritt 270 ergeben hat, dass sich noch Erntegut in der Erntemaschine 10 befinden kann, folgt der Schritt 272, in dem eine relativ hohe Drehzahl der Verbrennungsmotore 32 und/oder 34 ausgewählt wird, die sicher zum Abfördern des Ernteguts aus der Erntemaschine 10 hinreicht, insbesondere hinsichtlich der Fördervorrichtung 28. Dadurch vermeidet man, dass sich die Fördervorrichtung 28 oder die ihr folgende Austrageinrichtung 30 bei den am Feldende nur verbleibenden, relativ geringen Erntegutdurchsätzen mit Erntegut zusetzt.

### Stillstand

Hat der Schritt 222 ergeben, dass sich die Erntemaschine 10 nicht im Vorgewende oder auf einer Leerfahrt befindet, folgt der Schritt 226, in dem geprüft wird, ob die Erntemaschine stillsteht. Dazu kann im Konkreten abgefragt werden, ob sich die Geschwindigkeitsvorgabeeinrichtung 164 in der Neutralposition befindet (Sensor 162) und ob die Vortriebsgeschwindigkeit gleich null ist oder unterhalb einer Schwelle von beispielsweise 1 km/h liegt (anhand des Vortriebsgeschwindigkeitssignals). Sind beide Bedingungen gleichzeitig erfüllt, folgt der Schritt 228, anderenfalls der Schritt 200. Im Schritt 228 veranlasst die Steuereinrichtung 70 die Motorsteuerung 156 des jeweils aktiven Motors 32 und/oder 34, die Leerlaufdrehzahl einzustellen, die beispielsweise bei 900/min liegen kann. An dieser Stelle kann auch ein Abschalten (Anhalten) des oder der Verbrennungsmotore 32 und/oder 34 erfolgen, beispielsweise wenn die Erntemaschine 10 über eine längere Zeitspanne (z. B. 1 min) nicht mehr bewegt wurde. Es folgt wieder der Schritt 200.

### Drehzahl bei nach hinten gerichteter Austrageinrichtung

Im Schritt 220 wird zunächst anhand des Sensors 180 überprüft, ob die Austrageinrichtung 30 nach hinten gerichtet ist, d. h. das Erntegut über ein Zugfahrzeug in Form eines Traktors, einer Zugmaschine oder eines Lastwagens hinaus nach hinten über eine relativ hohe Distanz auf einen Ladebehälter zu werfen ist. Dabei kann ein Winkel von +/- 20° gegenüber der genau nach hinten gerichteten Position der Austrageinrichtung 30 als nach hinten gerichtet gelten. Ist das der Fall, folgt der Schritt 230, in dem die höchste Drehzahl des Verbrennungsmotors 32 und/oder 34 eingestellt wird. Man erreicht dadurch, dass die Fördervorrichtung 28 mit maximaler Drehzahl angetrieben wird, um die geforderte Überwurfdistanz zu erzielen. Auf den Schritt 230 folgt wieder der Schritt 200. Anzumerken ist, dass der Schritt 230 nur folgt, wenn für eine bestimmte Zeitspanne, beispielsweise mindestens 1 s, über das Tastenfeld 168 keine Verstellung des Aktors 170 erfolgt. Dadurch wird verhindert, dass die maximale Drehzahl des Verbrennungsmotors 32 und/oder 34 ausgewählt wird, wenn der Bediener die Austrageinrichtung 30 von einer Seite der Erntemaschine 10 auf ihre andere Seite verbringt, z. B. am Feldende. Befindet sich die Austrageinrichtung 30 in dem erwähnten Winkelbereich, in dem sie als nach hinten gerichtet angesehen wird, und wird sie dann aus diesem Winkelbereich herausgedreht, wird die maximale Drehzahl über einen größeren Winkelbereich aufrechterhalten, der beispielsweise weitere +/- 10° umfassen kann, die sich an den zuvor erwähnten Winkelbereich anschließen. Nähert sich die Austrageinrichtung 30 von der Seite der Erntemaschine 10 her in den größeren Winkelbereich, bleibt zunächst die ursprüngliche Drehzahl aufrecht erhalten, bis die Austrageinrichtung 30 in den zuvor erwähnten, engeren Winkelbereich eindringt und die höchste Drehzahl gemäß Schritt 230 ausgewählt wird. Durch diese Hysterese wird ein unerwünschtes Springen der Drehzahl vermieden.

### Manuelle Drehzahlvorgabe

Falls der Schritt 220 ergibt, dass die Austrageinrichtung 30 nicht nach hinten gerichtet ist, folgt der Schritt 209, in dem abgefragt wird, ob im Schritt 206 eine manuelle Drehzahlvorgabe ausgewählt wurde. Ist das der Fall, folgt der Schritt 208, in dem der Bediener die gewünschte Drehzahl des Verbrennungsmotors 32 und/oder 34 über ein geeignetes Menü oder einen Drehknopf (nicht gezeigt) an der Bedienereingabeeinrichtung 98 oder einen in der Nähe der Geschwindigkeitsvorgabeeinrichtung 164 angeordneten Drehknopf 190 eingeben kann. Die Vortriebsgeschwindigkeit wird, wie bei der Straßenfahrt, durch die Geschwindigkeitsvorgabeeinrichtung 164 vorgegeben und die zum Antrieb der Hydromotoren für die Räder 14, 16 dienende Pumpe im Pumpenaggregat 116 und die Hydromotoren der Räder 14, 16 werden derart angesteuert, dass eine mit der Geschwindigkeitsvorgabeeinrichtung 164 einstellbare Vortriebsgeschwindigkeit erreicht wird. Auf den Schritt 208 folgt wieder der Schritt 200.

### Automatische Drehzahlvorgabe

Falls sich im Schritt 209 ergibt, dass die manuelle Drehzahlauswahl nicht ausgewählt wurde, folgt der Schritt 232. Dort wird die Belastung des Verbrennungsmotors 32 und/oder 34 bestimmt und die Drehzahl anhand der in der Figur 5 dargestellten Kurve 234 ausgewählt.

Die Figur 5 zeigt das Kennlinienfeld der Verbrennungsmotore 32 und 34; auf der x-Achse ist die Drehzahl und auf der y-Achse die Leistung dargestellt. Die einzelnen Kurven 236 kennzeichnen jeweils Punkte mit demselben spezifischen Kraftstoffverbrauch, der in g/kWh gemessen werden kann. Es ist durch die Beschriftung gekennzeichnet, dass in der unteren rechten Ecke bei hohen Drehzahlen und geringen Leistungen ein relativ hoher spezifischer Kraftstoffverbrauch vorliegt, während der spezifische Kraftstoffverbrauch oben links, d. h. bei geringen Drehzahlen und mittleren Leistungen, relativ niedrig ist. Nach oben hin wird das Kennlinienfeld durch eine obere Grenzkurve 238 begrenzt, die durch das Leistungsvermögen des Verbrennungsmotors 32 und/oder 34 vorgegeben wird. Nach rechts wird das Kennlinienfeld bei 240 durch die maximale Drehzahl des Verbrennungsmotors 32 und/oder 34 begrenzt. Die obere Grenzkurve 238 hat unterhalb der maximalen Drehzahl 240 bei etwa 1900/min ein absolutes Maximum 242, das der maximalen vom Verbrennungsmotor 32 und/oder 34 abgebbaren Leistung entspricht. Bei der Drehzahl des Maximums 242 und einer (hier um etwas mehr als 10 Prozent) darunter liegenden Leistung liegt ein lokales Minimum 266 des spezifischen Kraftstoffverbrauchs. Die niedrigste dargestellte Drehzahl entspricht der Leerlaufdrehzahl.

Es wird nun davon ausgegangen, dass die Erntemaschine 10 zunächst noch kein Erntegut aufgenommen hat, so dass der Steuereinrichtung 70 von der Motorsteuerung 156 die Information vorliegt, dass die Belastung des Verbrennungsmotors 32 und/oder 34 relativ klein ist. Die Steuereinrichtung 70 wählt demnach anhand der Kurve 234 aus der Figur 5 die maximale Drehzahl aus (Punkt 244). Steigt anschließend die Belastung an, weil Erntegut aufgenommen wird, behält die Steuereinrichtung 70 entsprechend der Kurve 234 zunächst die maximale Drehzahl bei, bis ein erster Leistungswert 246 erreicht wird. Steigt dann die Belastung und Leistung weiter an, wird die Drehzahl mit steigender Belastung linear vermindert, bis bei einem zweiten Leistungswert 248 die Drehzahl erreicht wird, die auch dem Maximum 242 entspricht und bei der auch das lokale Minimum 266 liegt. Bei weiter steigender Belastung bleibt gemäß der Kurve 234 die Drehzahl konstant, bis hin zum Maximum 242. Sinkt bei dieser Drehzahl die Belastung wieder ab, hält die Steuereinrichtung 70 die Drehzahl ebenfalls konstant, bis ein dritter Leistungswert 250 erreicht wird. Bei dann noch weiter absinkender Belastung erhöht die Steuereinrichtung 70 linear, bis bei einem vierten Leistungswert 252 wieder die maximale Drehzahl erreicht wird. Der dritte Leistungswert ist kleiner als der zweite Leistungswert. Auch ist der vierte Leistungswert kleiner als der erste Leistungswert. Es wird hier demnach eine Hysterese durchlaufen, die bei ansteigenden Emtegutdurchsätzen eine höhere Verbrennungsmotordrehzahl und demnach eine bessere Förderung durch die Fördervorrichtung 28 bevorzugt.

Im sich an den Schritt 232 anschließenden Schritt 254 wird abgefragt, ob in den Schritten 210 bzw. 212 eine automatische Drehzahlbegrenzung ausgewählt wurde. Ist das nicht der Fall, folgt auf den Schritt 254 der Schritt 260. Falls sich in diesem Fall die Leistung und die Drehzahl beim Maximum 242 befinden und die Belastung weiter ansteigt, wird die Drehzahl des Verbrennungsmotors zwangsweise aufgrund der Kurve 234, die vom Maximum 242 nach links der oberen Grenzkurve 238 folgt, und dementsprechend auch seine Leistung absinken.

Anderenfalls folgt auf den Schritt 254 der Schritt 256, in dem geprüft wird, ob die Belastung des Verbrennungsmotors 32 und/oder 34 derart groß ist, dass er bereits auf der Grenzkurve 238 arbeitet. Ist das der Fall, bestimmt die Steuereinrichtung 70 einen Vortriebsgeschwindigkeitssollwert, bei dem der Verbrennungsmotor 32 und/oder 34 auf dem Maximum 242 arbeitet. Im sich anschließenden Schritt 258 stellt die Steuereinrichtung 70 eine tatsächliche Vortriebsgeschwindigkeit ein, die dem kleineren Wert (Minimum) aus der mit der Geschwindigkeitsvorgabeeinrichtung 164 eingegebenen Geschwindigkeit und dem von der Steuereinrichtung 70 im Schritt 256 bestimmten Vortriebsgeschwindigkeitssollwert entspricht. Bei der Betriebsart der automatischen Drehzahlauswahl mit Drehzahlbegrenzung kann der Bediener demnach die Geschwindigkeitsvorgabeeinrichtung 164 auf die höchste Geschwindigkeit stellen und die Steuereinrichtung 70 hält den Verbrennungsmotor 32 und/oder 34 durch entsprechende Wahl der Vortriebsgeschwindigkeit stets auf dem Maximum 242, so dass maximale Durchsätze ermöglicht werden, insofern der Bestand auf dem Feld diese ermöglicht. Es folgt wieder der Schritt 200.

Falls sich beim Übergang vom Schritt 258 zum Schritt 200 die Leistung und die Drehzahl beim Maximum 242 befinden und die Belastung weiter ansteigt, wird die Drehzahl des Verbrennungsmotors zwangsweise aufgrund der Kurve 234, die vom Maximum 242 nach links der oberen Grenzkurve 238 folgt, und dementsprechend auch seine Leistung absinken.

Falls der Schritt 254 ergibt, dass keine Drehzahlbegrenzung ausgewählt wurde, folgt der Schritt 260, in dem abgefragt wird, ob der Effizienzmodus ausgewählt wurde. Ist das nicht der Fall folgt der Schritt 200 und anderenfalls folgt der Schritt 264, in dem die Steuereinrichtung 70 die Motorsteuerung 156 des Verbrennungsmotors 32 und/oder 34 anweist, eine Drehzahl einzustellen, die dem Punkt 262 entspricht, welcher wiederum im lokalen Minimum 266 des spezifischen Kraftstoffverbrauchs des Kennlinienfelds der Figur 5 und bei der Drehzahl des Maximums 242 liegt. Außerdem berechnet die Steuereinrichtung 70 einen Geschwindigkeitssollwert, bei dem eine dem Punkt 262 entsprechende Belastung des Verbrennungsmotors 32 und/oder 34 erreicht wird. Im sich anschließenden Schritt 258 stellt die Steuereinrichtung 70 eine tatsächliche Vortriebsgeschwindigkeit ein, die dem kleineren Wert (Minimum) aus der mit der Geschwindigkeitsvorgabeeinrichtung 164 eingegebenen Geschwindigkeit und dem von der Steuereinrichtung 70 im Schritt 260 bestimmten Vortriebsgeschwindigkeitssollwert entspricht. Bei der Betriebsart des Effizienzmodus kann der Bediener demnach die Geschwindigkeitsvorgabeeinrichtung 164 auf die höchste Geschwindigkeit stellen und die Steuereinrichtung 70 hält den Verbrennungsmotor 32 und/oder 34 durch entsprechende Wahl der Vortriebsgeschwindigkeit stets auf dem Punkt 262 im lokalen Minimum des spezifischen Kraftstoffverbrauchs, so dass eine Kraftstoff sparende Arbeitsweise ermöglicht wird, die gegenüber der Betriebsart der automatischen Drehzahlauswahl mit Drehzahlbegrenzung einige Prozent Kraftstoff einspart.

Anzumerken ist, dass im Schritt 264 bei relativ kleinen, unterhalb eines Schwellenwerts liegenden Erntegutdurchsätzen (analog zu den Schritten 270 und 272) eine relativ hohe Drehzahl des oder der Verbrennungsmotor(e) 32 und/oder 34 ausgewählt werden kann, die höher als die Drehzahl des lokalen Minimums 266 und des Leistungsmaximums 242 liegt, um eine sichere Abförderung des Ernteguts insbesondere durch die Fördervorrichtung 28 und die Austrageinrichtung 30 zu erreichen. Dabei kann z. B. der Arbeitspunkt der Verbrennungsmotore 32, 34 vom Punkt 262 im Diagramm nach Figur 5 horizontal nach rechts verschoben werden oder die Hysterese mit den Punkten 240, 248, 250 und 252 und den Linien 234 wird bei den erwähnten, kleineren Gutdurchsätzen nach oben verschoben. Zur Erfassung des Emtegutdurchsatzes kann der Durchsatz erfasst werden, beispielsweise anhand des Abstands zwischen den Vorpresswalzen des Einzugsförderers 22 oder vorausschauend mittels einer Kamera oder eines Scanners zur Abtastung des vor der Erntemaschine 10 vorhandenen Bestands. Alternativ oder zusätzlich kann der Bedarf der Antriebsleistung für den Vortrieb und anderer nicht zur Erntegutbearbeitung benötigter Elemente (z. B. Klimaanlage, Motorkühlung etc.) erfasst werden, um durch Subtraktion der dafür benötigten Antriebsleistung von der Leistung der Verbrennungsmotore 32 und/oder 34 die Leistung für die Erntegutbearbeitung und somit den Erntegutdurchsatz festzustellen. Es folgt wieder der Schritt 200.

Bei den beschriebenen Einstell- und Regelungsvorgängen finden mehrfach Änderungen der Drehzahl eines oder beider der Verbrennungsmotore 32, 34 statt. Diese Änderungen sollen einerseits möglichst schnell erfolgen, um das erwünschte Ergebnis möglichst schnell zu erzielen. Andererseits können zu schnelle Änderungen der Drehzahl unerwünschte Abnutzungseffekte auf die Riemen 50 und 72 haben. Die Rate (Geschwindigkeit) der Drehzahländerungen kann demnach fest vorgegeben sein, oder sie ist durch den Bediener über die Bedienereingabeeinrichtung 98 einstellbar.

Falls nur ein einziger Verbrennungsmotor 32 oder 34 benötigt wird, geht die Steuereinrichtung 70 in der oben beschriebenen Weise vor. Befinden sich beide Verbrennungsmotore 32 und 34 im Betrieb, werden beide anhand der Kurve 234 aus Figur 5 angesteuert, falls sie gleichartig sind, d. h. die gleiche Nennleistung haben. Werden Verbrennungsmotore 32, 34 unterschiedlicher Leistungen verwendet, werden ihnen jeweils zugeordnete Kurven gemäß Figur 5 verwendet, wobei die Drehzahlen beider Verbrennungsmotore 32, 34 gleich sind und sie in der Betriebsart des Effizienzmodus in ihren lokalen Minima des spezifischen Kraftstoffverbrauchs oder bei der verbrauchsgünstigsten Kombination der Arbeitspunkte auf den Kennlinienfeldern betrieben werden.

## Patentansprüche

1. Selbstfahrende Erntemaschine (10), umfassend:
einen Verbrennungsmotor (32, 34),
eine elektronische Steuereinrichtung (70), die mit dem Verbrennungsmotor (32, 34) gekoppelt ist und die Drehzahl des Verbrennungsmotors (32, 34) vorgeben kann, und die mit einer Information beaufschlagbar ist, ob sich die Erntemaschine (10) im Straßenfahrbetrieb oder im Erntebetrieb befindet,
**dadurch gekennzeichnet, dass** die Steuereinrichtung (70) im Erntebetrieb betreibbar ist, in einer Automatikbetriebsart die Drehzahl des Verbrennungsmotors (32, 34) abhängig von einer durch die Steuereinrichtung (70) selbsttätig erkannten Erntebetriebssituation der Erntemaschine (10) vorzugeben,
dass die von der Steuereinrichtung (70) erkennbaren Erntebetriebssituationen einen Stillstand, eine Leerfahrt ohne Erntegutaufnahme und einen eigentlichen Erntebetrieb umfassen,
dass die Steuereinrichtung (70) betreibbar ist, bei Stillstand der Erntemaschine (10) die Drehzahl des Verbrennungsmotors (32, 34) auf eine Leerlaufdrehzahl zu verbringen oder den Verbrennungsmotor (32, 34) anzuhalten,
dass die Steuereinrichtung (70) betreibbar ist, bei der Leerfahrt die Drehzahl des Verbrennungsmotors (32, 34) auf eine mittlere, konstante oder veränderliche Drehzahl zu verbringen, die zwischen der Leerlaufdrehzahl und einer maximalen Drehzahl (240) liegt, insofern sich kein Erntegut mehr in der Erntemaschine (10) befindet, während sie bei noch vorhandenem Erntegut eine höhere Drehzahl des Verbrennungsmotors (32, 34) auswählt, die sicher zum Abfördern des Ernteguts aus der Erntemaschine hinreicht,
und dass die Steuereinrichtung (70) im eigentlichen Erntebetrieb eine maximale oder eine etwas darunter liegende Drehzahl des Verbrennungsmotors (32, 34) verwendet.

2. Selbstfahrende Erntemaschine (10) nach Anspruch 1, **dadurch gekennzeichnet, dass** die Steuereinrichtung (70) betreibbar ist, die Erntebetriebssituation anhand von Bedienereingaben und/oder durch die Bedienereingaben beeinflussten Stellgrößen zu erkennen, die zur Steuerung des Vortriebs und des Erntebetriebs der Erntemaschine (10) dienen.

3. Selbstfahrende Erntemaschine (10) nach Anspruch 1 oder 2, **dadurch gekennzeichnet, dass** die Steuereinrichtung (10) mit einem Schalter (158) verbunden ist, mit dem ein Bediener zwischen einem Straßenfahrbetrieb und einem Erntebetrieb umschalten kann, und betreibbar ist, den Erntebetrieb anhand der Stellung des Schalters (158) zu erkennen.

4. Selbstfahrende Erntemaschine (10) nach einem der Ansprüche 1 bis 3, **dadurch gekennzeichnet, dass** die Leerfahrt ohne Erntegutaufnahme oder während eines Wendemanövers der Erntemaschine im Vorgewende durch die Steuereinrichtung (70) anhand der Position eines Erntevorsatzes (20) und/oder der Betriebsart eines Einzugsförderers (22) und/oder anhand der Vortriebsgeschwindigkeit erkennbar ist.

5. Selbstfahrende Erntemaschine (10) nach einem der Ansprüche 1 bis 4, **dadurch gekennzeichnet, dass** eine durch die Steuereinrichtung (70) erkennbare Erntebetriebssituation ein Einfahren der Erntemaschine (10) in ein abzuerntendes Feld ist, die insbesondere anhand einer Information hinsichtlich des Schließens einer Kupplung (96) im Antriebsstrang der für den Erntebetrieb benötigten Arbeitsorgane und/oder der Betriebsart eines Einzugsförderers (22) und anhand der Vortriebsgeschwindigkeit erkennbar ist, und dass die Steuereinrichtung (70) betreibbar ist, die Drehzahl des Verbrennungsmotors (32, 34) beim Einfahren der Erntemaschine (10) in das abzuerntende Feld auf eine maximale oder auswählbare Drehzahl (240) zu verbringen.

6. Selbstfahrende Erntemaschine (10) nach Anspruch 5, **dadurch gekennzeichnet, dass** die Steuereinrichtung (70) betreibbar ist, die Drehzahl des Verbrennungsmotors (32, 34) nach dem erkannten Einfahren der Erntemaschine in das abzufahrende Feld aufgrund einer erkannten, dann ansteigenden Belastung des Verbrennungsmotors (32, 34) selbsttätig auf einen Wert abzusenken, der einer maximalen abgebbaren Leistung oder einem lokalen Minimum (266) des spezifischen Kraftstoffverbrauchs entspricht.

7. Selbstfahrende Erntemaschine (10) nach Anspruch 6, **dadurch gekennzeichnet, dass** die Steuereinrichtung (70) betreibbar ist, die Drehzahl des Verbrennungsmotors (32, 34) bei ansteigender Belastung zunächst konstant zu lassen, bis ein bestimmter, erster Leistungswert (246) erreicht ist, und bei dann weiter steigender Belastung die Drehzahl kontinuierlich zu verringern, bis bei einem zweiten Leistungswert (248) der Wert der Drehzahl erreicht ist, der einer maximalen abgebbaren Leistung oder einem lokalen Minimum (266) des spezifischen Kraftstoffverbrauchs entspricht.

8. Selbstfahrende Erntemaschine (10) nach einem der Ansprüche 6 oder 7, **dadurch gekennzeichnet, dass** die Steuereinrichtung (70) betreibbar ist, nach dem Erreichen des Wert der Drehzahl, der einer maximalen abgebbaren Leistung oder einem minimalen spezifischen Kraftstoffverbrauch entspricht, und dann wieder absinkender Belastung die Drehzahl des Verbrennungsmotors (32, 34) zunächst konstant zu lassen, bis ein bestimmter, dritter Leistungswert (250) erreicht ist, der vorzugsweise kleiner als der zweite Leistungswert (248) ist und dann bei weiter absinkender Belastung die Drehzahl kontinuierlich zu vergrößern, bis bei einem vierten Leistungswert (252), der vorzugsweise kleiner als der erste Leistungswert (246) ist, die maximale Drehzahl (240) erreicht ist, und diese maximale Drehzahl (240) bei weiter sinkender Belastung beizubehalten.

9. Selbstfahrende Erntemaschine (10) nach einem der Ansprüche 1 bis 8, **dadurch gekennzeichnet, dass** die Steuereinrichtung (70) betreibbar ist, die Drehzahl des Verbrennungsmotors (32, 34) auf die maximale Drehzahl (240) zu verbringen, wenn eine Austrageinrichtung (30) der Erntemaschine (10) nach hinten gerichtet ist.

10. Selbstfahrende Erntemaschine (10) nach einem der Ansprüche 1 bis 9, **dadurch gekennzeichnet, dass** die Steuereinrichtung (70) betreibbar ist, bei unterhalb eines bestimmten Schwellenwerts liegenden Emtegutdurchsätzen die Drehzahl des Verbrennungsmotors (32, 34) über einen Wert der Drehzahl anzuheben, der einer maximalen abgebbaren Leistung oder einem minimalen spezifischen Kraftstoffverbrauch entspricht, um eine ordnungsgemäße Abförderung des Ernteguts zu erreichen.

11. Selbstfahrende Erntemaschine (10) nach einem der vorhergehenden Ansprüche, **dadurch gekennzeichnet, dass** die Steuereinrichtung (70) im Erntebetrieb betreibbar ist, in einem auswählbaren Effizienzmodus die Vortriebsgeschwindigkeit der Erntemaschine (10) und die Drehzahl des Verbrennungsmotors (32, 34) derart zu kontrollieren, dass der Verbrennungsmotor (32, 34) bei einer Drehzahl und Belastung betrieben wird, der einem lokalen Minimum (266) des spezifischen Kraftstoffverbrauchs des Verbrennungsmotors (32, 34) entspricht.

12. Selbstfahrende Erntemaschine (10) nach einem der vorhergehenden Ansprüche, **dadurch gekennzeichnet, dass** die Steuereinrichtung (70) mit einer Bedienereingabeeinrichtung (98) verbunden ist, mit der ein Bediener eine Automatikbetriebsart und/oder den Effizienzbetriebsmodus und/oder eine manuelle Betriebsart auswählen kann.

13. Selbstfahrende Erntemaschine (10) nach einem der vorhergehenden Ansprüche, **dadurch gekennzeichnet, dass** sie mehrere Verbrennungsmotore (32, 34) aufweist, deren Kurbelwellen (38) miteinander koppelbar sind und die beide mit der Steuereinrichtung (70) verbunden sind.

14. Selbstfahrende Erntemaschine (10) nach einem der vorhergehenden Ansprüche, **dadurch gekennzeichnet, dass** die Steuereinrichtung (70) mit einem Sensor (160, 162) zur Erfassung der Position und/oder Neutralstellung einer durch den Bediener verstellbaren Geschwindigkeitsvorgabeeinrichtung (164) und/oder einer Hauptkupplung (96) und/oder einem Vortriebsgeschwindigkeitssignal und/oder einem Sensor (180) zur Erfassung der Position einer Austrageinrichtung (30) der Erntemaschine (10) um die Hochachse und/oder einem Sensor (182) zur Erfassung der Höhenposition eines Erntevorsatzes (20) und/oder einem Belastungssignal des Verbrennungsmotors (32, 34) und/oder einem Sensor (186) zur Erfassung der Geschwindigkeit einer Emtegutzuführeinrichtung (22) verbunden ist.

## Claims

1. Automotive harvesting machine (10), comprising:
an internal combustion engine (32, 34),
an electronic control device (70) which is coupled to the internal combustion engine (32, 34) and can predetermine the rotational speed of the internal combustion engine (32, 34), and which can be charged with information as to whether the harvesting machine (10) is in the road mode or in the harvesting mode,
**characterized in that** the control device (70) can be operated in the harvesting mode in order, in an automatic type of operation, to predetermine the rotational speed of the internal combustion engine (32, 34) depending on a harvesting mode situation of the harvesting machine (10), which harvesting mode situation is automatically identified by the control device (70),
**in that** the harvesting mode situations which can be identified by the control device (70) comprise standstill, idling without picking up crop, and an actual harvesting mode,
**in that** the control device (70) can be operated in order, when the harvesting machine (10) is at a standstill, to bring the rotational speed of the internal combustion engine (32, 34) to an idling rotational speed or to stop the internal combustion engine (32, 34),
**in that** the control device (70) can be operated in order, during idling, to bring the rotational speed of the internal combustion engine (32, 34) to an average, constant or variable rotational speed lying between the idling rotational speed and a maximum rotational speed (240) if there is no more crop in the harvesting machine (10) while, if crop is still present, the control device selects a higher rotational speed of the internal combustion engine (32, 34), said rotational speed sufficing reliably to convey away the crop from the harvesting machine,
and **in that** the control device (70) in the actual harvesting mode uses a maximum or a somewhat lower rotational speed of the internal combustion engine (32, 34).

2. Automotive harvesting machine (10) according to Claim 1, **characterized in that** the control device (70) can be operated in order to identify the harvesting mode situation on the basis of operator inputs and/or actuating variables which are influenced by the operator inputs and serve to control the propulsion and the harvesting mode of the harvesting machine (10).

3. Automotive harvesting machine (10) according to Claim 1 or 2, **characterized in that** the control device (10) is connected to a switch (158) with which an operator can switch over between a road mode and a harvesting mode and which can be operated in order to identify the harvesting mode on the basis of the position of the switch (158).

4. Automotive harvesting machine (10) according to one of Claims 1 to 3, **characterized in that** the idling without picking up crop or during a turning manoeuvre of the harvesting machine in the headland can be identified by the control device (70) on the basis of the position of a harvesting attachment (20) and/or the type of operation of an intake conveyor (22), and/or on the basis of the propulsion speed.

5. Automotive harvesting machine (10) according to one of Claims 1 to 4, **characterized in that** a harvesting mode situation which can be identified by the control device (70) is an entry of the harvesting machine (10) into a field which is to be harvested, said harvesting mode situation being able to be identified in particular on the basis of information regarding the closing of a clutch (96) in the drive train of the working members required for the harvesting mode and/or the type of operation of an intake conveyor (22) and on the basis of the propulsion speed, and **in that** the control device (70) can be operated so as to bring the rotational speed of the internal combustion engine (32, 34) to a maximum or to a selectable rotational speed (240) upon entry of the harvesting machine (10) into the field to be harvested.

6. Automotive harvesting machine (10) according to Claim 5, **characterized in that** the control device (70) can be operated in order, after the identified entry of the harvesting machine into the field to be harvested, to automatically lower the rotational speed of the internal combustion engine (32, 34) on the basis of an identified and in this case rising loading of the internal combustion engine (32, 34) to a value which corresponds to a maximum power which can be output or to a local minimum (266) of the specific fuel consumption.

7. Automotive harvesting machine (10) according to Claim 6, **characterized in that** the control device (70) can be operated in order to initially keep the rotational speed of the internal combustion engine (32, 34) constant as the loading rises until a certain, first power value (246) is reached, and, as the loading then rises further, to continuously decrease the rotational speed until, at a second power value (248), the rotational speed value which corresponds to a maximum power which can be output or to a local minimum (266) of the specific fuel consumption is reached.

8. Automotive harvesting machine (10) according to either of Claims 6 and 7, **characterized in that** the control device (70) can be operated in order, after reaching the rotational speed value which corresponds to a maximum power which can be output or to a minimum specific fuel consumption, and then with the loading dropping again, to initially keep the rotational speed of the internal combustion engine (32, 34) constant until a certain, third power value (250) is reached, which power value is preferably smaller than the second power value (248), and then, as the loading drops further, to continuously increase the rotational speed until, at a fourth power value (252) which is preferably lower than the first power value (246), the maximum rotational speed (240) is reached, and to maintain said maximum rotational speed (240) as the loading drops further.

9. Automotive harvesting machine (10) according to one of Claims 1 to 8, **characterized in that** the control device (70) can be operated in order to bring the rotational speed of the internal combustion engine (32, 34) to the maximum rotational speed (240) when a discharge device (30) of the harvesting machine (10) is directed to the rear.

10. Automotive harvesting machine (10) according to one of Claims 1 to 9, **characterized in that** the control device (70) can be operated in order, at crop throughputs below a certain threshold value, to raise the rotational speed of the internal combustion engine (32, 34) above a rotational speed value which corresponds to a maximum power which can be output or to a minimum specific fuel consumption, in order to correctly convey away the crop.

11. Automotive harvesting machine (10) according to one of the preceding claims, **characterized in that** the control device (70) can be operated in the harvesting mode in order, in a selectable efficiency mode, to control the propulsion speed of the harvesting machine (10) and the rotational speed of the internal combustion engine (32, 34) in such a manner that the internal combustion engine (32, 34) is operated at a rotational speed and loading corresponding to a local minimum (266) of the specific fuel consumption of the internal combustion engine (32, 34).

12. Automotive harvesting machine (10) according to one of the preceding claims, **characterized in that** the control device (70) is connected to an operator input device (98) with which an operator can select an automatic type of operation and/or the efficiency operating mode and/or a manual type of operation.

13. Automotive harvesting machine (10) according to one of the preceding claims, **characterized in that** it has a plurality of internal combustion engines (32, 34), the crankshafts (38) of which can be coupled to one another and which are both connected to the control device (70).

14. Automotive harvesting machine (10) according to one of the preceding claims, **characterized in that** the control device (70) is connected to a sensor (160, 162) for detecting the position and/or neutral position of a speed specifying device (164), which can be adjusted by the operator, and/or to a main clutch (96) and/or to a propulsion speed signal and/or to a sensor (180) for detecting the position of a discharge device (30) of the harvesting machine (10) about the vertical axis, and/or to a sensor (182) for detecting the vertical position of a harvesting attachment (20), and/or to a loading signal of the internal combustion engine (32, 34) and/or to a sensor (186) for detecting the speed of a crop feeding device (22).

## Revendications

1. Récolteuse automobile (10), comprenant :
un moteur à combustion interne (32, 34),
un dispositif de commande électronique (70), qui est accouplé au moteur à combustion interne (32, 34) et qui peut prédéfinir le régime du moteur à combustion interne (32, 34), et qui peut recevoir une information indiquant si la récolteuse (10) est en mode de conduite sur route ou en mode de récolte,
**caractérisée en ce que** le dispositif de commande (70) peut fonctionner en mode de récolte, de manière à prédéfinir, dans un type de fonctionnement automatique, le régime du moteur à combustion interne (32, 34) en fonction d'une situation de mode de récolte de la récolteuse (10) détectée automatiquement par le dispositif de commande (70),
**en ce que** les situations de mode de récolte pouvant être détectées par le dispositif de commande (70) incluent un état d'arrêt, une marche à vide sans réception de produit de récolte, et un mode de récolte proprement dit,
**en ce que** le dispositif de commande (70) peut fonctionner à l'arrêt de la récolteuse (10), de manière à amener le régime du moteur à combustion interne (32, 34) à un régime de marche à vide ou à arrêter le moteur à combustion interne (32, 34),
**en ce que** le dispositif de commande (70) peut fonctionner, en marche à vide, de manière à amener le régime du moteur à combustion interne (32, 34) à un régime moyen, constant ou variable, qui se situe entre le régime de marche à vide et un régime maximum (240), dans la mesure où il n'y a plus de produit de récolte dans la récolteuse (10), tandis qu'il sélectionne un plus haut régime du moteur à combustion interne (32, 34) s'il y a encore du produit de récolte présent, lequel régime suffit à évacuer le produit de récolte hors de la récolteuse,
et **en ce que** le dispositif de commande (70), en mode de récolte proprement dit, utilise un régime maximum ou un peu inférieur, du moteur à combustion interne (32, 34).

2. Récolteuse automobile (10) selon la revendication 1, **caractérisée en ce que** le dispositif de commande (70) peut fonctionner de manière à détecter la situation de mode de récolte à l'aide de saisies de l'opérateur et/ou de grandeurs de réglage influencées par la saisie de l'opérateur, lesquelles grandeurs de réglage servent à la commande de propulsion de la récolteuse (10).

3. Récolteuse automobile (10) selon la revendication 1 ou 2, **caractérisée en ce que** le dispositif de commande (10) est connecté à un commutateur (158) avec lequel un opérateur peut commuter entre un mode de conduite sur route et un mode de récolte, et peut être utilisé pour détecter le mode de récolte à l'aide de la position du commutateur (158).

4. Récolteuse automobile (10) selon l'une quelconque des revendications 1 à 3, **caractérisée en ce que** la conduite en marche à vide sans réception de produit de récolte ou pendant une manoeuvre de la récolteuse en fourrière peut être détectée par le dispositif de commande (70) à l'aide de la position d'un accessoire de récolte (20) et/ou du mode de fonctionnement d'un convoyeur d'amenée (22) et/ou à l'aide de la vitesse de propulsion.

5. Récolteuse automobile (10) selon l'une quelconque des revendications 1 à 4, **caractérisée en ce qu'**une situation de mode de récolte détectable par le dispositif de commande (70) est l'entrée de la récolteuse (10) dans un champ à récolter, ladite situation pouvant notamment être détectée à l'aide d'une information concernant la fermeture d'un embrayage (96) dans la chaîne cinématique des organes de travail nécessaires au fonctionnement de récolte et/ou du mode de fonctionnement d'un convoyeur d'amenée (22) et à l'aide de la vitesse de propulsion, et **en ce que** le dispositif de commande (70) peut fonctionner de manière à amener le régime du moteur à combustion interne (32, 34) lors de l'entrée de la récolteuse (10) dans le champ à récolter à un régime maximum ou sélectionnable (240).

6. Récolteuse automobile (10) selon la revendication 5, **caractérisée en ce que** le dispositif de commande (70) peut fonctionner de manière à abaisser automatiquement le régime du moteur à combustion interne (32, 34) après la détection de l'entrée de la récolteuse dans le champ à récolter sur la base d'une charge détectée croissante du moteur à combustion interne (32, 34), jusqu'à une valeur qui correspond à une puissance maximale pouvant être fournie ou à un minimum local (266) de la consommation de carburant spécifique.

7. Récolteuse automobile (10) selon la revendication 6, **caractérisée en ce que** le dispositif de commande (70) peut fonctionner de manière à d'abord laisser constant le régime du moteur à combustion interne (32, 34) en cas de charge croissante, jusqu'à ce qu'une première valeur de puissance déterminée (246) soit atteinte, puis, si la charge continue d'augmenter, à réduire de manière continue le régime jusqu'à ce que, à une deuxième valeur de puissance (248), la valeur du régime qui correspond à une puissance maximale pouvant être fournie ou à un minimum local (266) de la consommation de carburant spécifique soit atteinte.

8. Récolteuse automobile (10) selon l'une quelconque des revendications 6 ou 7, **caractérisée en ce que** le dispositif de commande (70) peut fonctionner, après avoir atteint la valeur du régime qui correspond à une puissance maximale pouvant être fournie ou à une consommation de carburant spécifique minimale, puis après une réduction de la charge, de manière à d'abord laisser constant le régime du moteur à combustion interne (32, 34) jusqu'à ce qu'une troisième valeur de puissance déterminée (250) soit atteinte, laquelle est de préférence inférieure à la deuxième valeur de puissance (248), puis, si la charge continue de diminuer, de manière à augmenter en continu le régime jusqu'à ce qu'à une quatrième valeur de puissance (252) qui est de préférence inférieure à la première valeur de puissance (246), le régime maximum (240) soit atteint, et de manière à conserver ce régime maximum (240) si la charge continue de diminuer.

9. Récolteuse automobile (10) selon l'une quelconque des revendications 1 à 8, **caractérisée en ce que** le dispositif de commande (70) peut fonctionner de manière à amener le régime du moteur à combustion interne (32, 34) au régime maximum (240) lorsqu'un dispositif de décharge (30) de la récolteuse (10) est orienté vers l'arrière.

10. Récolteuse automobile (10) selon l'une quelconque des revendications 1 à 9, **caractérisée en ce que** le dispositif de commande (70) peut fonctionner, si les débits de produit de récolte sont en dessous d'un seuil déterminé, de manière à augmenter le régime du moteur à combustion interne (32, 34) au-dessus d'une valeur de régime qui correspond à une puissance maximale pouvant être fournie ou à une consommation de carburant spécifique minimale, afin d'obtenir une évacuation ordonnée du produit de récolte.

11. Récolteuse automobile (10) selon l'une quelconque des revendications précédentes, **caractérisée en ce que** le dispositif de commande (70) peut fonctionner en mode de récolte de manière à contrôler, dans un mode de productivité sélectionnable, la vitesse d'avance de la récolteuse (10) et le régime du moteur à combustion interne (32, 34) de telle sorte que le moteur à combustion interne (32, 34) soit entraîné à un régime et avec une charge qui correspondent à un minimum local (266) de la consommation de carburant spécifique du moteur à combustion interne (32, 34).

12. Récolteuse automobile (10) selon l'une quelconque des revendications précédentes, **caractérisée en ce que** le dispositif de commande (70) est connecté à un dispositif de saisie par opérateur (98), avec lequel un opérateur peut sélectionner un mode automatique et/ou le mode de fonctionnement de productivité et/ou un mode manuel.

13. Récolteuse automobile (10) selon l'une quelconque des revendications précédentes, **caractérisée en ce qu'**elle présente plusieurs moteurs à combustion interne (32, 34), dont les vilebrequins (38) peuvent être accouplés les uns aux autres et qui sont tous deux connectés au dispositif de commande (70).

14. Récolteuse automobile (10) selon l'une quelconque des revendications précédentes, **caractérisée en ce que** le dispositif de commande (70) est connecté à un capteur (160, 162) pour détecter la position et/ou la position neutre d'un dispositif de présélection de vitesse (164) réglable par l'opérateur et/ou d'un embrayage principal (96) et/ou d'un signal de vitesse d'avance et/ou à un capteur (180) pour détecter la position d'un dispositif de décharge (30) de la récolteuse (10) autour de l'axe vertical et/ou à un capteur (182) pour détecter la position en hauteur d'un accessoire de récolte (20) et/ou un signal de charge du moteur à combustion interne (32, 34), et/ou à un capteur (186) pour détecter la vitesse d'un dispositif d'alimentation en produit de récolte (22).
